# EUROPEAN PATENT APPLICATION

(11) **EP 3 089 127 A1**
(43) Date of publication of application: **02.11.2016**
(21) Application number: 16167296.9
(22) Date of filing: 27.04.2016
(51) Int. Cl.: G07G 1/00, G07G 1/14, G06Q 20/40, G06Q 20/20

(54) **CUSTOMER MANAGEMENT SYSTEM, CUSTOMER MANAGEMENT APPARATUS AND CUSTOMER MANAGEMENT METHOD**

(30) Priority: 30.04.2015 JP 2015093003
(71) Applicant: Toshiba TEC Kabushiki Kaisha, Tokyo 141-0032 (JP)
(72) Inventor: HARAGUCHI, Takeshi, Shinagawa-ku, Tokyo 141-8562 (JP); TERAHARA, Toshiyasu, Shinagawa-ku, Tokyo 141-8562 (JP); SHIMURA, Takahiro, Shinagawa-ku, Tokyo 141-8562 (JP); KAWAGUCHI, Yuki, Shinagawa-ku, Tokyo 141-8562 (JP)
(74) Representative: Takeuchi, Maya

(57) **Abstract**

A customer management apparatus comprises a registration processing section configured to register customer management data containing commodity information indicating a commodity purchased by a customer and a customer image for specifying the customer; a selection processing section configured to acquire the customer image for specifying the customer to select, from all the customer management data registered by the registration processing section, customer management data containing a customer image matching with the acquired customer image; and a settlement processing section configured to carry out a settlement processing based on the commodity information contained in the customer management data selected by the selection processing section.

## Description

### FIELD

Embodiments described herein relate generally to a customer management system, a customer management apparatus and a customer management method.

### BACKGROUND

In a store such as a supermarket, it is well-known in a POS (Point Of Sales) system that a store clerk registers commodities purchased by a customer and the customer performs a settlement on the purchased commodities by his/herself. For example, a POS system is disclosed in Japanese Unexamined Patent Application Publication No. 2014-119792 in which a registration apparatus for registering a commodity purchased by a customer and a settlement apparatus for settling the commodities registered by the registration apparatus are arranged at different places.

To settle commodities through the settlement apparatus, a commodity apparatus registers commodity information indicating all the commodities purchased by a customer in one transaction and transaction identification information for uniquely identifying the transaction in an external terminal such as a store controller. Further, the registration apparatus prints the registered transaction identification information which is coded with a two-dimensional code on an accounting receipt (print medium). On the other hand, the settlement apparatus reads the transaction identification information printed on the accounting receipt to receive the commodity information corresponding to the read transaction identification information from an external terminal. In this way, the settlement apparatus carries out the settlement processing on the commodities registered by the commodity apparatus.

### BRIEF DESCRIPTION OF DRAWINGS

Fig. 1 is a diagram illustrating the structure of a customer management system according to an embodiment of the present invention;
Fig. 2 is a diagram illustrating the relationship between apparatuses of the customer management system in a commodity registration processing and a settlement processing;
Fig. 3 is a diagram illustrating the relationship between the apparatuses of the customer management system in a regulation processing;
Fig. 4 is a block diagram illustrating the structure of a customer management apparatus shown in Fig. 1;
Fig. 5 is a diagram illustrating the structure of a customer management data file shown in Fig. 4;
Fig. 6 is a block diagram illustrating the structure of a commodity information supply apparatus shown in Fig. 1;
Fig. 7 is a block diagram illustrating the structure of a settlement apparatus shown in Fig. 1;
Fig. 8 is a block diagram illustrating the structure of a regulation apparatus shown in Fig. 1;
Fig. 9 is a flowchart illustrating a processing carried out by the customer management system;
Fig. 10 is a flowchart illustrating a registration control processing shown in Fig. 9 and a commodity information supply control processing carried out by the commodity information supply apparatus;
Fig. 11 is a flowchart illustrating a settlement control processing shown in Fig. 9 and a settlement control processing carried out by the settlement apparatus; and
Fig. 12 is a flowchart illustrating a regulation control processing shown in Fig. 9 and a regulation control processing carried out by the regulation apparatus.

### DETAILED DESCRIPTION

In accordance with an embodiment, a customer management system comprises a first acquisition section configured to acquire commodity information indicating a commodity purchased by a customer and a customer image for specifying the customer; a registration section configured to register customer management data containing the commodity information and the customer image that are acquired by the first acquisition section; a second acquisition section configured to acquire the customer image for specifying the customer; a first selection section configured to select, from all the customer management data registered by the registration section, customer management data containing a customer image matching with the customer image acquired by the second acquisition section; and a settlement section configured to carry out a settlement processing based on the commodity information contained in the customer management data selected by the first selection section.

Preferably, the customer management system further comprises an identification information providing section configured to add identification information for identifying the completion of a settlement processing to the customer management data containing the commodity information if the settlement processing based on the commodity information is completed by the settlement section.

Preferably, the customer management system further comprises a third acquisition section configured to acquire the customer image for specifying the customer; a second selection section configured to select, from all the customer management data registered by the registration section, customer management data containing a customer image matching with the customer image acquired by the third acquisition section; and a regulation section configured to regulate the leaving of the customer from a store if the identification information is not contained in the customer management data selected by the second selection section.

Preferably, the first selection section configured to select, from the customer management data registered by the registration section within a specific past time.

The present invention also relates to a customer management apparatus, comprising: a registration processing section configured to acquire, from a first apparatus, commodity information indicating a commodity purchased by a customer and a customer image for specifying the customer to register customer management data containing the acquired commodity information and the customer image; a selection processing section configured to acquire a customer image for specifying the customer from a second apparatus to select, from all the customer management data registered by the registration processing section, customer management data containing a customer image matching with the acquired customer image; and a settlement processing section configured to carry out a settlement processing by the second apparatus based on the commodity information contained in the customer management data selected by the selection processing section.

The present invention further relates to a customer management method, including:acquiring commodity information indicating a commodity purchased by a customer and a customer image for specifying the customer; registering customer management data containing the acquired commodity information and the acquired customer image; acquiring the customer image for specifying the customer; selecting, from all the registered customer management data, customer management data containing a customer image matching with the acquired customer image; and carrying out a settlement processing based on the commodity information contained in the selected customer management data.

Preferably, the customer management method further comprises: adding identification information for identifying the completion of a settlement processing to the customer management data containing the commodity information if the settlement processing based on the commodity information is completed.

Preferably, the customer management method further comprises: acquiring another customer image for specifying the customer; selecting, from all the registered customer management data, customer management data containing a customer image matching with the another customer image acquired; and regulating the leaving of the customer from a store if the identification information is not contained in the selected customer management data.

A customer management system, a customer management apparatus and a customer management method according to the present embodiment are described, as non-limiting examples, below with reference to the accompanying drawings. The customer management system is used in, for example, a supermarket, for the settlement of the commodities purchased by a customer.

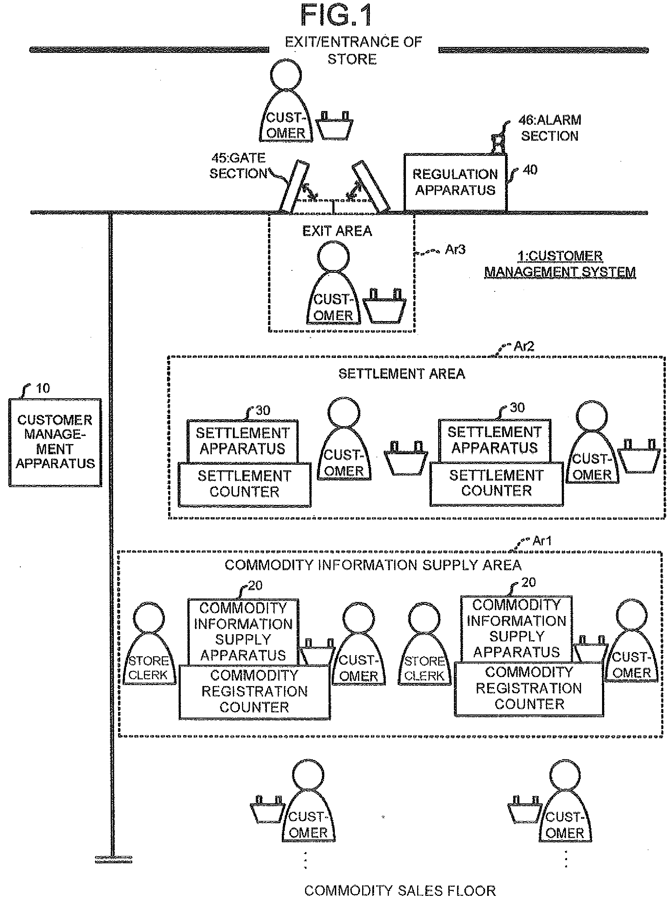

As shown in Fig. 1, a customer management system 1 comprises a customer management apparatus 10, a commodity information supply apparatus 20, a settlement apparatus 30 and a regulation apparatus 40, which are all arranged in a store.

The customer management apparatus 10 includes a store controller. The customer management apparatus 10 is arranged in an office of the store. The customer management apparatus 10 is connected, via a network such as a LAN (Local Area Network), with the commodity information supply apparatus 20, the settlement apparatus 30 and the regulation apparatus 40 to communicate with one another. The communication manner may be either of a wired manner and a wireless manner.

The commodity information supply apparatus 20, the settlement apparatus 30 and the regulation apparatus 40 are sequentially arranged in the direction from a commodity sales floor to the exit/entrance of the store.

The commodity information supply apparatus 20 includes a POS register. The commodity information supply apparatus 20, operated by a store clerk, is arranged on a commodity registration counter located in a commodity information supply area Ar1.

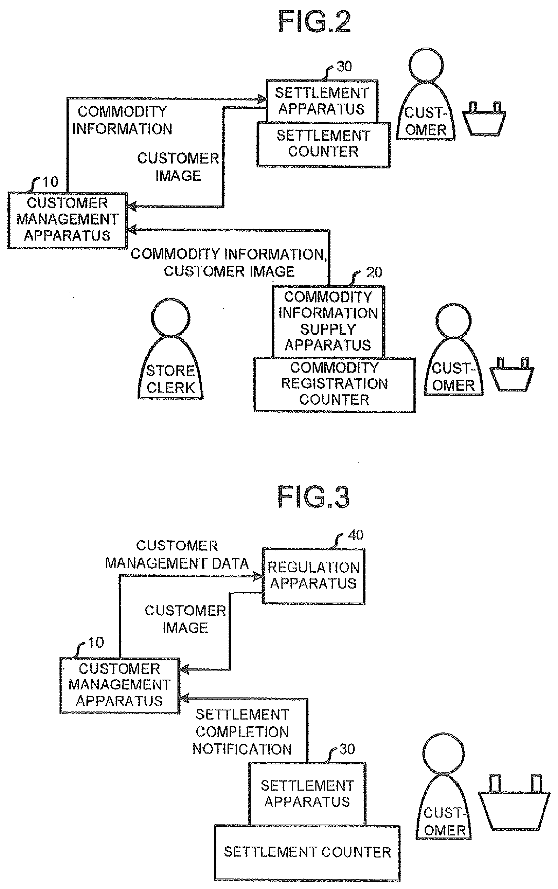

The commodity information supply apparatus 20 acquires commodity information indicating all the commodities purchased by a customer in one transaction. Further, the commodity information supply apparatus 20 acquires an image for specifying the customer (hereinafter referred to as a customer image). The customer image is, for example, an image including the whole face of the customer. Then, the commodity information supply apparatus 20 supplies the commodity information and the customer image to the customer management apparatus 10, as shown in Fig. 2. The customer management apparatus 10 acquires the commodity information and the customer image from the commodity information supply apparatus 20 and stores data containing the commodity information and the customer image (hereinafter referred to as a customer management data). The commodity information supply apparatus 20 does not issue the accounting receipt conventionally issued.

Return to Fig. 1, the settlement apparatus 30 includes a POS register. The settlement apparatus 30, arranged on a settlement counter located in a settlement area Ar2, is operated by a customer (customer who passes the commodity information supply area Ar1) whose purchased commodity is registered through the commodity information supply apparatus 20. The settlement apparatus 30 also acquires a customer image in the same way as the commodity information supply apparatus 20. As shown in Fig. 2, the settlement apparatus 30 supplies the acquired customer image to the customer management apparatus 10. The customer management apparatus 10, upon acquiring the customer image from the settlement apparatus 30, selects customer management data containing a customer image matching with the customer image acquired from the settlement apparatus 30 and then supplies the commodity information contained in the selected customer management data to the settlement apparatus 30. The settlement apparatus 30 carries out a settlement processing based on the commodity information acquired from the customer management apparatus 10.

Further, the settlement apparatus 30 notifies the customer management apparatus 10 of the completion of a settlement processing based on the commodity information, as shown in Fig. 3. Upon receiving the notification, the customer management apparatus 10 adds identification information for identifying the completion of the settlement processing to the customer management data having the commodity information which is settled.

Return to Fig. 1, the regulation apparatus 40 includes, for example, a PC (Personal Computer) terminal. The regulation apparatus 40 is arranged nearby an exit area Ar3 located in front of the exit/entrance of the store. Like the commodity information supply apparatus 20 and the settlement apparatus 30, the regulation apparatus 40 also acquires a customer image. As shown in Fig. 3, the regulation apparatus 40 supplies the acquired customer image to the customer management apparatus 10. The customer management apparatus 10, upon acquiring the customer image from the regulation apparatus 40, supplies the customer management data containing a customer image matching with the customer image acquired from the regulation apparatus 40 to the regulation apparatus 40. The regulation apparatus 40 regulates the passing of the customer through the exit/entrance of the store if the acquired customer image data contains no identification information for identifying the completion of the settlement processing.

In this way, according to the customer management system 1 of the present embodiment, since the commodity registration processing and the settlement processing based on the customer image are respectively carried out by the commodity information supply apparatus 20 (commodity information supply area Ar1) and the settlement apparatus 30 (settlement area Ar2), the workloads of the store clerk and the customer are reduced and the settlement on the commodities is carried out efficiently. Further, since the regulation processing based on the customer image is carried out by the regulation apparatus 40 (exit area Ar3), a customer who has a commodity on which no settlement is normally carried out is blocked at the exit/entrance of the store.

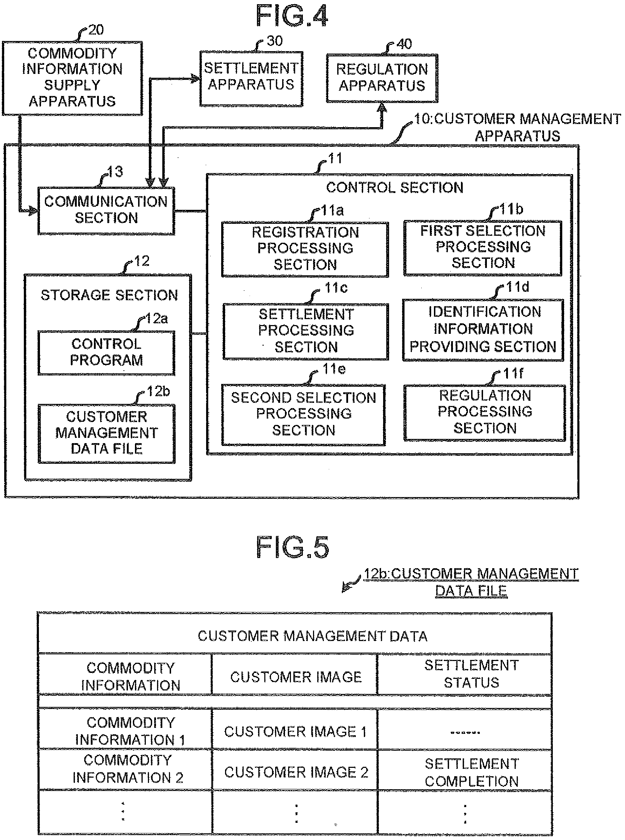

Then, the structure of the customer management apparatus 10 is described below with reference to Fig. 4. The customer management apparatus 10 comprises a control section 11, a storage section 12 and a communication section 13.

The communication section 13 including a communication interface device such as a network adapter communicates with the commodity information supply apparatus 20, the settlement apparatus 30 and the regulation apparatus 40.

The storage section 12 including a storage device such as an HDD (Hard Disk Drive), a ROM (Read Only Memory) or a flash memory stores a control program 12a and a customer management data file 12b.

The control program 12a realizes a customer management control processing described later by the control section 11.

As shown in Fig. 5, the customer management data file 12b includes a customer management data for each entry. The customer management data includes commodity information, a customer image and a settlement status. Apart from information (commodity names, prices, etc.) indicating all the commodities purchased by a customer in one transaction, the commodity information may further include a transaction ID for uniquely identifying the transaction, transaction time, information (e.g. an ID or a name of a store clerk) for identifying the store clerk who operates the commodity information supply apparatus 20 (who carries out a commodity registration processing) and information (e.g. manufacturing number, commodity registration counter number) for identifying the commodity information supply apparatus 20. The settlement status is information for identifying whether or not a settlement processing is completed. An identification information (settlement completion) for identifying the completion of a settlement is added to the settlement status according to the notification received from the settlement apparatus 30.

The control section 11 is composed of a CPU (Central Processing Unit), and a RAM (Random Access Memory) functioning as a main memory of the CPU. The control section 11 controls the whole customer management apparatus 10.

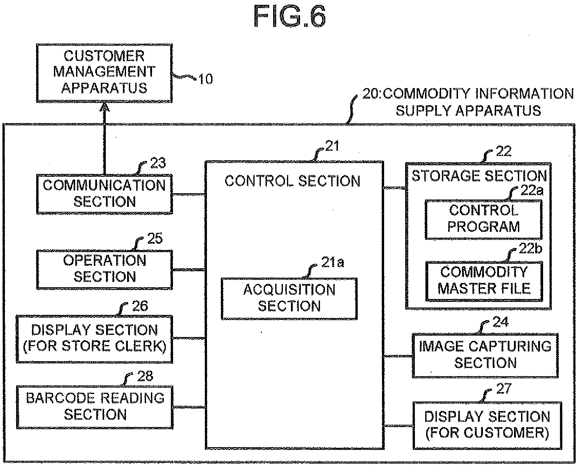

Then, the structure of the commodity information supply apparatus 20 is described below with reference to Fig. 6. The commodity information supply apparatus 20 comprises a control section 21, a storage section 22, a communication section 23, an image capturing section 24, an operation section 25, a display section for store clerk 26, a display section for customer 27 and a barcode reading section 28.

The communication section 23 is composed of a communication interface device such as a network adapter. The communication section 23 communicates with the customer management apparatus 10.

The image capturing section 24 is composed of an image capturing device such as a digital camera. The image capturing section 24 is arranged so that an image (customer image) at least containing the whole face of a customer is captured. The image capturing section 24 supplies the captured image to the control section 21 (acquisition section 21a).

The operation section 25 comprises various operational keys for operating the commodity information supply apparatus 20. Specifically, the keys includes a commodity 'registration' button for instructing the registration of a commodity, a 'capturing' button for instructing the capturing of a customer, numerical keys, a 'subtotal' key and a 'preset' key.

The display section for store clerk 26 and the display for customer 27 both are a display device such as a liquid crystal display. The display sections 26 and 27 display the commodity information (e.g. commodity name and price) read by the barcode reading section 28. The display section 26 is arranged such that the screen thereof faces a store clerk. The display section 27 is arranged such that the screen thereof faces a customer.

The barcode reading section 28 composed of a barcode reader reads a barcode attached to a commodity to supply the read barcode to the control section 21.

The storage section 22 composed of a storage device such as an HDD, a ROM and a flash memory stores a control program 22a and a commodity master file 22b.

The control program 22a is a program for realizing a function of a commodity registration control processing described later by the control section 21.

The commodity master file 22b stores information (e.g. name and price) of each commodity in the store. The control section 21 acquires commodity information corresponding to the barcode received from the barcode reading section 28 with reference to the commodity master file 22b. The commodity master file 22b is successively updated to the latest version by the customer management apparatus 10.

The control section 21 composed of a CPU and a RAM controls the whole commodity information supply apparatus 20.

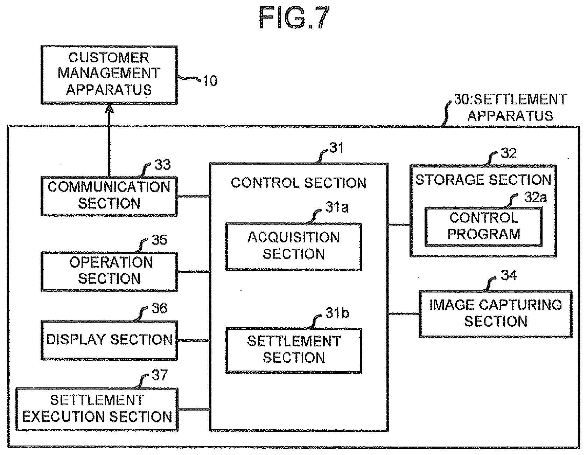

Then, the structure of the settlement apparatus 30 is described below with reference to Fig. 7. The settlement apparatus 30 comprises a control section 31, a storage section 32, a communication section 33, an image capturing section 34, an operation section 35, a display section 36 and a settlement execution section 37.

The communication section 33 including a communication interface device such as a network adapter communicates with the customer management apparatus 10.

The image capturing section 34 includes an image capturing device such as a digital camera. The image capturing section 34 is arranged so that an image (customer image) containing at least the whole face of a customer is captured. The image capturing section 34 supplies the captured image to the control section 31 (acquisition section 31a).

The operation section 35 includes various operational keys for operating the settlement apparatus 30. Specifically, the keys include a 'settlement start' key for requesting the start of a settlement processing, a 'settlement execution' key for instructing the execution of the settlement processing and an 'image capturing' key for instructing a photography of a customer.

The display section 36 includes a display device such as a liquid crystal display. The display section 36 displays various menu screens for the execution of the settlement processing and a screen for displaying the commodity information supplied from the customer management apparatus 10.

The settlement execution section 37 comprises a coin depositing port for depositing coins, a bill depositing port for depositing paper money (banknotes), a change dispensing port for dispensing change, a card reader for settlement with a card and a receipt printer for printing and outputting the settled commodity information.

The storage section 32 includes a storage device such as an HDD, a ROM and a flash memory. The storage section 32 stores a control program 32a.

The control program 32a is a program for realizing the function of a settlement control processing described later by the control section 31.

The control section 31 including a CPU and a RAM controls the whole settlement apparatus 30.

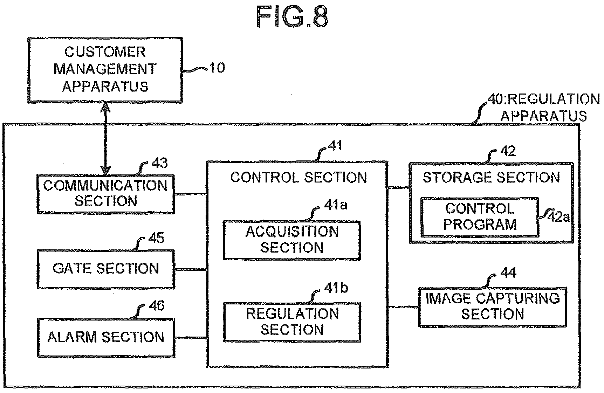

Then, the structure of the regulation apparatus 40 is described below with reference to Fig. 8. The regulation apparatus 40 comprises a control section 41, a storage section 42, a communication section 43, an image capturing section 44, a gate section 45 and an alarm section 46.

The communication section 43 composed of a communication interface device such as a network adapter communicates with the customer management apparatus 10.

The image capturing section 44 includes an image capturing device such as a digital camera. The image capturing section 44 is arranged so that an image (customer image) containing at least the whole face of a customer can be captured. The image capturing section 44 supplies the captured image to the control section 41 (acquisition section 41a).

The gate section 45, which is a gate for regulating a customer who leaves the store, is opened and closed under the control of the control section 41.

The alarm section 46, which is an alarm light or an alarm device that gives an alarm to a store clerk if a customer having a commodity on which the settlement is not yet carried out normally leaves the store, is driven under the control of the control section 41.

The storage section 42 includes a storage device such as an HDD, a ROM and a flash memory. The storage section 42 stores a control program 42a.

The control program 42a is a program for realizing a function of a regulation control processing described later by the control section 41.

The control section 41 includes a CPU and a RAM. The control section 41 controls the whole regulation apparatus 40.

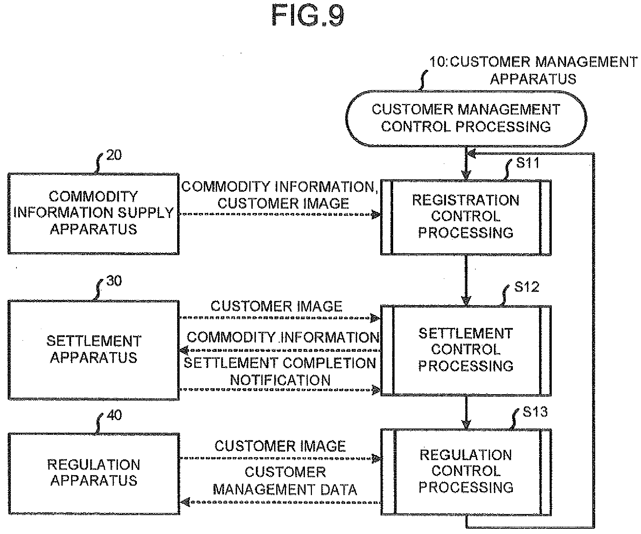

The operations carried out by the customer management system 1 with the foregoing structure are described below with reference to Fig. 9.

The control section 11 of the customer management apparatus 10 executes the control program 12a upon starting, and thus functions as a registration processing section 11a, a first selection processing section 11b, a settlement processing section 11c, an identification information providing section 11d, a second selection processing section 11e and a regulation processing section 11f.

The control section 21 of the commodity information supply apparatus 20 executes the control program 22a upon starting, and thus functions as the acquisition section 21a.

The control section 31 of the settlement apparatus 30 executes the control program 32a upon starting, and thus functions as the acquisition section 31a and a settlement section 31b.

The control section 41 of the regulation apparatus 40 executes the control program 42a upon starting, and thus functions as the acquisition section 41a and a regulation section 41b.

The customer management apparatus 10 communicates with the commodity information supply apparatus 20, the settlement apparatus 30 and the regulation apparatus 40 to carry out various processing, as shown in Fig. 9. The customer management apparatus 10 keeps a standby state for a period for which the customer management apparatus 10 receives no specific information from any of the commodity information supply apparatus 20, the settlement apparatus 30 and the regulation apparatus 40. A customer management control processing carried out by the customer management apparatus 10 includes a registration control processing (Act S11), a settlement control processing (Act S12) and a regulation control processing (Act S13), if it is roughly classified.

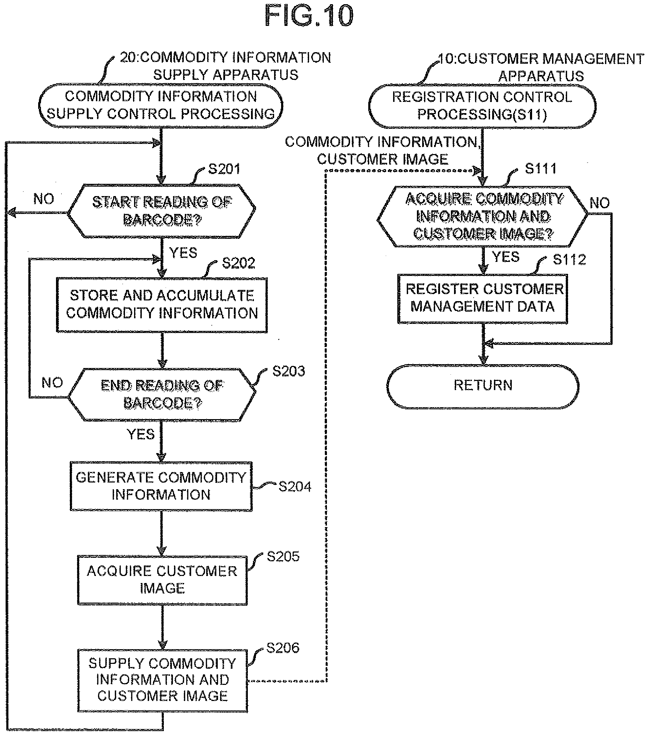

The registration control processing (Act S11) carried out by the customer management apparatus 10 and the commodity information supply control processing carried out by the commodity information supply apparatus 20 are described first with reference to Fig. 10.

The commodity information supply apparatus 20 keeps a standby state until a store clerk conducts an operation to start the reading of a barcode attached to a commodity purchased by a customer (Act S201: No).

If a barcode reading operation is started (Act S201: Yes), the acquisition section 21a of the commodity information supply apparatus 20 receives, from the barcode reading section 28, a barcode attached to a commodity and acquires and accumulates the information (e.g. name and price) of the commodity corresponding to the received barcode with reference to the commodity master file 22b (Act S202).

The store clerk ends the barcode reading operation if the reading of the barcode of each commodity in a shopping basket is completed. The acquisition section 21a carries out the processing in Act S202 to accumulate the acquired commodity information sequentially until the store clerk ends the barcode reading operation (Act S203: No).

If the barcode reading operation is ended (Act S203: Yes), the acquisition section 21a generates commodity information (Act S204). Apart from the commodity information (information indicating all the commodities purchased by a customer in one transaction) accumulated in Act S202, the commodity information further includes a transaction ID for uniquely identifying the transaction, transaction time, information (e.g. an ID or a name of a store clerk) for identifying the store clerk who operates the commodity information supply apparatus 20 (who carries out a commodity registration processing) and information (e.g. manufacturing number, commodity registration counter number) for identifying the commodity information supply apparatus 20.

Then, the acquisition section 21a acquires a customer image (Act S205). Specifically, the acquisition section 21a captures an image of the customer through the image capturing section 24 and specifies a facial contour from the captured image of the customer. The acquisition section 21a acquires an image in which all the elements of the specified contour are contained (an image including the whole face of the customer) as a customer image. Further, a facial contour is specified with the use of a well-known method. The image capturing section 24 may photograph the customer in response to an operation of the store clerk or the customer or photograph automatically when the acquisition section 21a recognizes the customer in front of the image capturing section 24 after the processing in Act S204 is carried out. A method of recognizing the customer is that, for example, it is recognized according to the image captured by the image capturing section 24. After that, the acquisition section 21a supplies the acquired commodity information and customer image to the customer management apparatus 10 (Act S206).

As stated above, a series of processing included in the commodity registration control processing carried out by the commodity information supply apparatus 20 is ended. The acquisition section 21a of the commodity information supply apparatus 20 carries out the processing in Act S201-Act S206 repeatedly until the commodity information supply apparatus 20 is powered off or the processing is interrupted by the operation of the store clerk.

On the other hand, the registration processing section 11a of the customer management apparatus 10 proceeds to the processing in Act S12 shown in Fig. 9 if no commodity information or customer image is acquired from the commodity information supply apparatus 20 (Act S111: No, Return).

If acquiring the commodity information and the customer image from the commodity information supply apparatus 20 (Act S111: Yes), the registration processing section 11a registers the customer management data containing the acquired commodity information and the customer image as a new entry of the customer management data file 12b (Act S112). Sequentially, the first selection processing section 11b proceeds to the processing in Act S12 shown in Fig. 9 (Return).

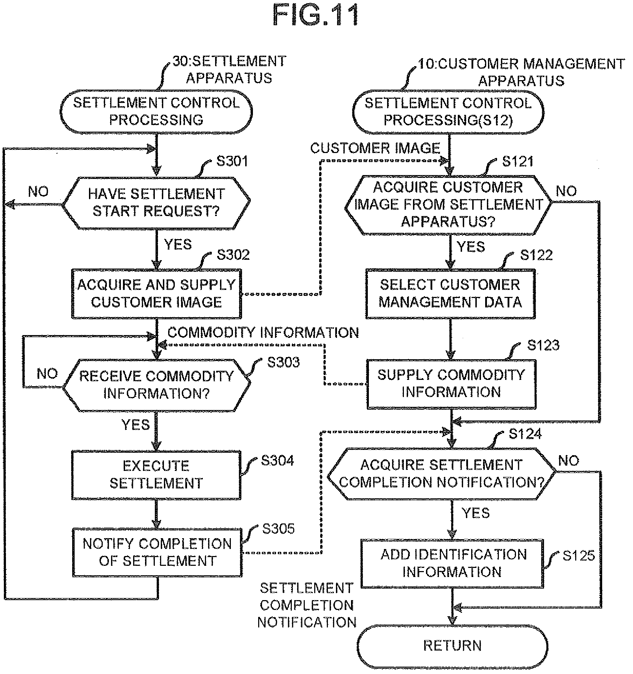

Then, the settlement control processing (Act S12 shown in Fig. 9) carried out by the customer management apparatus 12 and the settlement control processing carried out by the settlement apparatus 30 are described with reference to Fig. 11.

After the processing executed by the commodity information supply apparatus 20 is completed, the customer moves to the settlement apparatus 30 to request the start of a settlement processing by pressing the 'settlement start' key (operation section 35) of the settlement apparatus 30. The acquisition section 31a of the settlement apparatus 30 keeps a standby state until the customer requests the start of a settlement processing (Act S301: No).

If the start of a settlement processing is requested (Act S301: Yes), the acquisition section 31a acquires a customer image. Specifically, the acquisition section 31a captures an image of the customer through the image capturing section 34, and specifies a facial contour according to the captured image of the customer to acquire the image containing each element of the specified contour (an image including the whole face of the customer) as a customer image. Further, to correctly make a comparison with a customer image registered in the customer management apparatus 10, the acquisition section 31a photographs the customer through the image capturing section 34 under the same photographic condition as the commodity information supply apparatus 20, the photographic condition covering brightness, contrast and photographic position and direction with respect to a face. Like the commodity information supply apparatus 20, the image capturing section 34 may photograph the customer according to an operation of the customer or photograph automatically when the acquisition section 31a recognizes the customer in front of the image capturing section 34 after the start of a settlement processing is requested. The acquisition section 31a supplies the acquired customer image to the customer management apparatus 10 (Act S302) to request the customer management apparatus 10 to supply the commodity information corresponding to the customer image. After supplying the customer image, the acquisition section 31a keeps a standby state until the commodity information is received from the customer management apparatus 10 (Act S303: No).

On the other hand, the first selection processing section 11b of the customer management apparatus 10 proceeds to the processing in Act S13 shown in Fig. 9 if neither customer image nor settlement completion notification is acquired from the settlement apparatus 30 (Act S121: No, Act S124: No, Return).

If acquiring the customer image from the settlement apparatus 30 (Act S121: Yes), the first selection processing section 11b selects customer management data containing a customer image matching with the acquired customer image (Act S122). Specifically, the first selection processing section 11b calculates (template matching) how much similar the customer image contained in each customer management data stored in the customer management data file 12b is to the acquired customer image which is set as a template image (the similarity degree between the customer images). The first selection processing section 11b specifies, among the customer images having a similarity degree higher than a preset threshold, the customer image with the highest similarity degree as a customer image matching with the acquired customer image. The first selection processing section 11b selects the customer management data containing the specified customer image. The similarity degree may be calculated by using SAD (Sum of Absolute Difference) or SSD (Sum of Squared Difference). Further, the template image may be enlarged or reduced for an image comparison.

The settlement processing section 11c supplies the commodity information contained in the customer management data selected by the first selection processing section 11b to the settlement apparatus 30 (Act S123) to carry out a settlement processing by the settlement apparatus 30 based on the commodity information.

Upon receiving the commodity information from the customer management apparatus 10 (Act S303: Yes), the settlement section 31b of the settlement apparatus 30 displays the received commodity information on the display section 36, along with a screen for the customer to select a settlement method (e.g. settlement with cash, settlement with a credit card or settlement with electronic money). The customer selects a settlement method through the operation section 35 and carries out an operation through the settlement execution section 37 according to the selected settlement method. The settlement section 31b carries out a settlement processing according to an operation of the customer (Act S304) . Then, the settlement section 31b notifies the customer management apparatus 10 of a message indicating the completion of a settlement processing based on the commodity information (Act S305).

As described above, a series of processing included in the settlement control processing carried out by the settlement apparatus 30 is ended. The acquisition section 31a and the settlement section 31b of the settlement apparatus 30 carry out the processing in Act S301-Act S305 repeatedly until the settlement apparatus 30 is powered off or the processing is interrupted by the store clerk.

On the other hand, upon receiving the notification indicating the completion of a settlement processing from the settlement apparatus 30 (Act S124: Yes), the identification information providing section 11d of the customer management apparatus 10 adds the identification information for identifying the completion of a settlement processing (settlement completion) to the customer management data containing the settled commodity information, as shown in Fig. 5 (Act S125). Then, the second selection processing section 11e proceeds to the processing in Act S13 shown in Fig. 9 (Return).

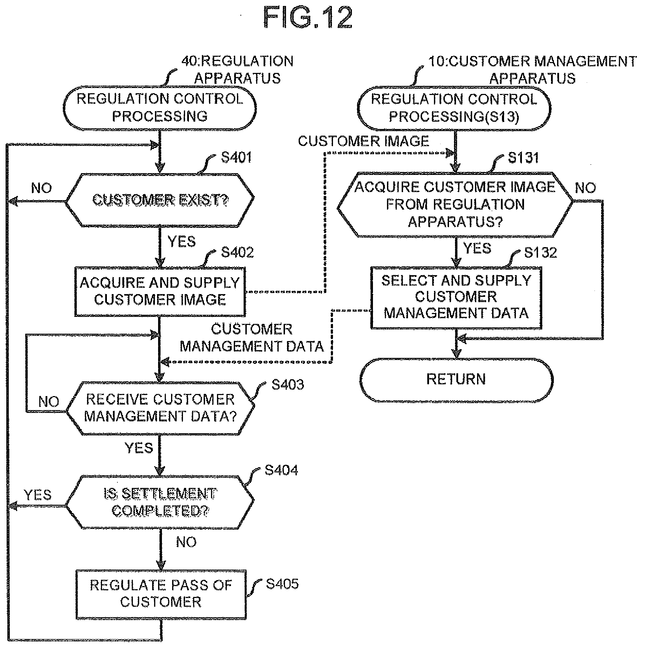

The regulation control processing (Act S13 shown in Fig. 9) carried out by the customer management apparatus 10 and that carried out by the regulation apparatus 40 are described below with reference to Fig. 12.

The acquisition section 41a of the regulation apparatus 40 determines whether or not there is a customer in the exit area Ar3 located in front of the exit/ entrance of the store (Act S401). Specifically, the acquisition section 41a photographs the exit area Ar3 through the image capturing section 44 to determine whether or not a person (customer) is included in an image received from the image capturing section 44. The image capturing section 44 may be replaced by a human body sensor for the determination processing. The acquisition section 41a carries out the processing in Act S401 repeatedly until the existence of a customer in the exit area Ar3 is determined (Act S401: No).

The acquisition section 41a acquires a customer image from the image captured by the image capturing section 34 if it is determined that a customer is present in the exit area Ar3 (Act S401: Yes). Further, to correctly make a comparison with a customer image registered in the customer management apparatus 10, the acquisition section 41a photographs the customer through the image capturing section 34 under the same photographic condition as the commodity information supply apparatus 20, the photographic condition covering brightness, contrast and photographic position and direction with respect to a face. The acquisition section 41a supplies the acquired customer image to the customer management apparatus 10 (Act S402) to request the customer management apparatus 10 to supply customer management data. The acquisition section 41a keeps a standby state until the customer management data is received from the customer management apparatus 10 (Act S403: No).

On the other hand, the second selection processing section 11e of the customer management apparatus 10 returns to carry out the processing in Act S11 shown in Fig. 9 if no customer image is acquired from the regulation apparatus 40 (Act S131: No, Return).

If a customer image is acquired from the regulation apparatus 40 (Act S131: Yes), the second selection processing section 11e selects customer management data containing a customer image matching with the acquired customer image in the same way as the first selection processing section 11b. The regulation processing section 11f supplies the customer management data selected by the second selection processing section 11e to the regulation apparatus 40 (Act S132) to carry out a regulation processing by the regulation apparatus 40 based on the customer image data. Then, the regulation processing section 11f returns to carry out the processing in Act S11 shown in Fig. 9.

As stated above, a series of processing included in the customer management control processing carried out by the customer management apparatus 10 is ended. The registration processing section 11a, the first selection processing section 11b, the settlement processing section 11c, the identification information providing section 11d, the second selection processing section 11e and the regulation processing section 11f of the customer management apparatus 10 carry out the processing in Act S11-Act S13 repeatedly until the customer management apparatus 1 is powered off or the processing is interrupted by the store clerk.

Return to Fig. 12, the regulation section 41b of the regulation apparatus 40, if receiving customer image data from the customer management apparatus 10 (Act S403: Yes), determines whether or not a settlement processing is completed according to whether or not identification information (settlement completion) for identifying the completion of a settlement processing is contained in the customer image data (Act S404). The regulation section 41b determines that a settlement processing is not completed (Act S404: No) if no identification information (settlement completion) is contained in the customer image data. In this case, the regulation section 41b regulates the passing of the customer through the exit/entrance of the store (Act S405) . For example, the regulation section 41b blocks the exit area Ar3 with the gate section 45 to regulate the path of the customer who leaves the store. Further, the regulation section 41b notifies the store clerk or a security guard of an abnormal situation by activating the alarm section 46. On the other hand, the regulation section 41b determines that a settlement processing is completed (Act S404: Yes) if the identification information (settlement completion) is contained in the customer image data. In this case, the regulation section 41b allows the customer to pass through the exit/entrance of the store.

As stated above, a series of processing included in the regulation control processing carried out by the regulation apparatus 40 is ended. The acquisition section 41a and the regulation section 41b of the regulation apparatus 40 carry out the processing in Act S401-Act S405 repeatedly until the regulation apparatus 40 is powered off or the processing is interrupted by the store clerk.

As stated above, according to the customer management system 1 of the present embodiment, by acquiring a customer image in the settlement apparatus 30, the commodity information acquired in the commodity information supply apparatus 20 is specified and a settlement processing based on the specified commodity information can be carried out. Therefore, the workloads of the store clerk and the customer can be reduced and the settlement on the commodities purchased by the customer can also be carried out more efficiently.

Further, by acquiring a customer image in the regulation apparatus 40, a customer, having commodities on which a settlement processing is not carried out normally (a customer who does not complete the settlement of the purchased commodities) with the settlement apparatus 30, who leaves the store can be blocked.

Further, although it is described in the foregoing embodiment that the regulation section 41b of the regulation apparatus 40 regulates the passing of a customer through the exit/entrance of the store only in a case in which the customer image data received from the customer management apparatus 10 contains no identification information (settlement completion) for identifying the completion of a settlement processing, the regulation section 41b may also carry out the regulation in a case in which a notification for informing that the customer management data is not detected (no matched customer image) is received or in a case in which no customer image data is received from the customer management apparatus 10 within a specific time.

Further, although it is described in the foregoing embodiment that the regulation processing section 11f of the customer management apparatus 10 supplies the customer management data selected by the second selection processing section 11e to the regulation apparatus 40 so that the regulation apparatus 40 carries out a regulation processing based on the customer image data, the regulation processing section 11f may supply a control signal to the regulation apparatus 40 to control the regulation apparatus 40 in a case in which no identification information (settlement completion) is contained in the customer management data. In the latter case, the regulation processing section 11f may notify the store clerk in the office of the store of an abnormal situation such that the customer image acquired by the regulation apparatus 40 is displayed on the display section.

Further, in view of the time for which the customer stays in the settlement area Ar2 or the exit area Ar3, the first selection processing section 11b and the second selection processing section 11e of the customer management apparatus 10 may only select the data from the customer management data that are stored within a specific past time, (preferably less than 3 hours, for example, 30 minutes) but not from all the customer management data included in the customer management data file 12b, thus making it possible to reduce the processing time for the comparison of customer images and improve the accuracy of the comparison result of the customer images.

Further, the customer management data stored in the customer management apparatus 10 may be deleted at the time the customer management data is supplied from the customer management apparatus 10 to the regulation apparatus 40.

Further, data for sales promotion analysis maybe generated based on the customer management data stored in the customer management apparatus 10. Specifically, the gender, the age and other attributes of the customer are specified according to the customer image contained in the customer management data, and purchased commodities, purchase time and other information are specified according to the commodity information contained in the customer management data. Such attribute information can be used as the data for sales promotion analysis and thus may be stored.

Further, an image which includes the whole face of a customer is described above as a customer image; however, the customer image may be any image as long as it can be used to specify a customer, for example, an image indicating a fingerprint, a palm (vein) or an iris.

Further, a part of the components of the customer management apparatus 10 may be included in the commodity information supply apparatus 20, the settlement apparatus 30 and the regulation apparatus 40. Further, a part of the components of the commodity information supply apparatus 20, the settlement apparatus 30 and the regulation apparatus 40 may be included in the customer management apparatus 10.

The foregoing embodiment and the accompanying drawings can be modified properly but are not to be construed as limiting the present invention.

## Claims

1. A customer management system, comprising:
a first acquisition section configured to acquire commodity information indicating a commodity purchased by a customer and a customer image for specifying the customer;
a registration section configured to register customer management data containing the commodity information and the customer image that are acquired by the first acquisition section;
a second acquisition section configured to acquire the customer image for specifying the customer;
a first selection section configured to select, from all the customer management data registered by the registration section, customer management data containing a customer image matching with the customer image acquired by the second acquisition section; and
a settlement section configured to carry out a settlement processing based on the commodity information contained in the customer management data selected by the first selection section.

2. The customer management system according to claim 1, further comprising
an identification information providing section configured to add identification information for identifying the completion of a settlement processing to the customer management data containing the commodity information if the settlement processing based on the commodity information is completed by the settlement section.

3. The customer management system according to claim 2, further comprising
a third acquisition section configured to acquire the customer image for specifying the customer;
a second selection section configured to select, from all the customer management data registered by the registration section, customer management data containing a customer image matching with the customer image acquired by the third acquisition section; and
a regulation section configured to regulate the leaving of the customer from a store if the identification information is not contained in the customer management data selected by the second selection section.

4. The customer management system according to any one of claims 1 to 3, wherein the first selection section configured to select, from the customer management data registered by the registration section within a specific past time.

5. A customer management apparatus, comprising:
a registration processing section configured to acquire, from a first apparatus, commodity information indicating a commodity purchased by a customer and a customer image for specifying the customer to register customer management data containing the acquired commodity information and the customer image;
a selection processing section configured to acquire a customer image for specifying the customer from a second apparatus to select, from all the customer management data registered by the registration processing section, customer management data containing a customer image matching with the acquired customer image; and
a settlement processing section configured to carry out a settlement processing by the second apparatus based on the commodity information contained in the customer management data selected by the selection processing section.

6. A customer management method, including:
acquiring commodity information indicating a commodity purchased by a customer and a customer image for specifying the customer;
registering customer management data containing the acquired commodity information and the acquired customer image;acquiring the customer image for specifying the customer;
selecting, from all the registered customer management data, customer management data containing a customer image matching with the acquired customer image; and
carrying out a settlement processing based on the commodity information contained in the selected customer management data.

7. The customer management method according to claim 6, further comprising
adding identification information for identifying the completion of a settlement processing to the customer management data containing the commodity information if the settlement processing based on the commodity information is completed.

8. The customer management method according to claim 6 or 7, further comprising:
acquiring another customer image for specifying the customer;
selecting, from all the registered customer management data, customer management data containing a customer image matching with the another customer image acquired; and
regulating the leaving of the customer from a store if the identification information is not contained in the selected customer management data.
